# EUROPÄISCHE PATENTSCHRIFT

(11) **EP 4 551 648 B1**
(45) Veröffentlichungstag und Bekanntmachung des Hinweises auf die Patenterteilung: **28.01.2026**
(21) Anmeldenummer: 22747294.1
(22) Anmeldetag: 06.07.2022
(51) Int. Cl.: C08K 5/14, C08L 83/04, H01B 3/46

(54) **SILICONELASTOMER FÜR HVDC**
SILICONE ELASTOMER FOR HVDC
ÉLASTOMÈRE DE SILICONE POUR CCHT

(43) Veröffentlichungstag der Anmeldung: 14.05.2025
(73) Patentinhaber: Wacker Chemie AG, 81671 München (DE)
(72) Erfinder: HINDELANG, Konrad, 86956 Schongau (DE); ASSMANN, Tamara, 84371 Triftern (DE); LAMBRECHT, Jens, 84503 Altötting (DE); MIEDL, Mathias, 84570 Polling (DE)
(74) Vertreter: Mieskes, Klaus Theoderich
(86) Internationale Anmeldenummer: PCT/EP2022/068672
(87) Internationale Veröffentlichungsnummer: WO 2024/008283

(56) Entgegenhaltungen:
- WO-A1-2021/195038
- US-A1- 2020 350 094

## Beschreibung

Die vorliegende Erfindung betrifft ein vernetztes Siliconelastomer, ein Verfahren zu dessen Herstellung und seine Verwendung in Hochspannungs-Gleichstromsystemen HVDC- (high voltage direct current) Anwendungen.

### Stand der Technik

Die Stromübertragung über große Entfernungen kann mittels HVDC wesentlich kostengünstiger als mittels Hochspannungs-Wechselstromsystemen HVAC (high voltage alternating current) erfolgen, da sie geringere elektrische Verluste mit sich bringt. Insbesondere bei der unterirdischen HVDC-Fernübertragung muss ein hoher Einsatz von Kabelverbindungen erfolgen, nämlich alle 1 bis 2 km.

Die isolierenden Materialien, die in Hochspannungs-Wechselstromsystemen verwendet werden, sind jedoch meist nicht in HVDC-Systemen nutzbar, da die elektrische Beanspruchung für Wechsel- und Gleichstrombedingungen signifikant unterschiedlich sein kann.

Die örtliche Verteilung des elektrischen Feldes in HVDC-Anwendungen wird über die spezifischen Volumenwiderstände der verwendeten elektrischen Isolierstoffe bestimmt. Im Stand der Technik wird deshalb in diesen Kabelverbindungen überwiegend EPDM (Ethylen-Propylen-Dien-Kautschuk) verwendet, da sich dessen Widerstand unterhalb dessen von Polyolefin basierten Isolierstoffen für die Kabel einordnet.

EPDM hat aufgrund seiner hohen Härte und der Vielzahl der verwendeten Füllstoffe (Verunreinigungen) ein oftmals nachteiliges Verhalten bei der Montage und im Betrieb.

Siliconelastomere werden bisher für HVDC-Anwendungen nicht eingesetzt, da deren Widerstand im Vergleich zum Kabelisolierstoff zu hoch ist.

In Stand der Technik werden daher elektrisch leitfähige Füllstoffe (z. B. Metallpulver, Metallflocken, Ruße oder Kohlenstoffnanoröhren) eingesetzt, um den Widerstand des gehärteten Siliconelastomers einzustellen. Solche Füllstoffe können weitere Probleme aufwerfen, da es auf Grund der sehr geringen Menge fast unmöglich ist, diese Füllstoffe im Mischprozess einheitlich im Material zu verteilen, um dann einheitliche elektrische Eigenschaften innerhalb des gehärteten Siliconelastomers zu erhalten. Zudem führen sie zu einer Verschlechterung der physikalischen Eigenschaften und einer verringerten Durchschlagsfestigkeit des gehärteten Siliconelastomers. WO2021195038A1 offenbart Siliconzusammensetzungen enthaltend Kieselsäure-Füllstoffe, die teilweise mit fluorierten hydrophobierenden Behandlungsmitteln oberflächenbehandelt wurden. Hier sind die hohen Rohstoffkosten ein wesentliche Nachteil.

US2020350094 A1 schlägt vernetzte Silikonelastomere mit elektrisch leitfähigen Füllstoffen zur Einstellung des Durchgangswiderstands eines vernetzten Silikonelastomers auf den Durchgangswiderstand einer Kabelisolierung vor.

Zusammenfassend zeigen sich folgende Nachteile der im Stand der Technik bekannten Systeme:
Der Nachteil von gefüllten Systemen besteht zum einen in der Reproduzierbarkeit (z.B. steiler Abfall des Widerstandes im Bereich der Perkolationsschwelle), zum anderen in ihrer möglichen anisotropen Wirkung (Metalloxide auf Plättchenartigen Trägersystemen) und ihrer Abhängigkeit von der Feuchtigkeit.

Fluorierte Systeme sind grundsätzlich sehr kostenintensiv, zudem sollten aus Umweltaspekten halogenierte Polymere grundsätzlich möglichst vermieden werden.

Mischungen basierend auf EPDM sind hart, schwierig zu verarbeiten und zu montieren.

Es besteht daher ein großer Bedarf an Siliconzusammensetzungen für die Herstellung von Siliconelastomeren für HVDC-Anwendungen, die die oben genannten Nachteile des Standes-der-Technik nicht zeigen.

Überraschenderweise wurde gefunden, dass die vorliegenden erfindungsgemäßen, vernetzten Siliconelastomere die notwendige Absenkung des elektrischen Widerstandes dauerhaft aufweisen.

**Gegenstand der vorliegenden Erfindung** sind daher vernetzte Siliconelastomere, deren Durchgangswiderstand auf den Durchgangswiderstand einer angrenzenden Kabelisolierung eingestellt wurde,
wobei dieser Durchgangswiderstand an einem 0,5 mm dicken vernetzten Siliconelastomer, in einer beheizbaren Schutzringanordnung mit einer elektrischen Feldstärke von 1 kV/mm, gemäß Standard IEC 62631-3-1 bestimmt wird und folgenden Wert nach Anlegen der Prüfspannung erfüllt:
   - nach 10.000 Minuten: < 1,0 10¹⁶ Ohm*cm,
erhältlich durch Vernetzung einer Grundmasse enthalten:
   (A) 50 bis 99 Gew.% wenigstens eines Diorganopolysiloxanes mit mindestens 2 vernetzungsfähigen Gruppen pro Molekül,
   (B) 0,5 bis 5 Gew.% wenigstens eines Peroxids,
   (C) 0 bis 50 Gew.% wenigstens eines verstärkenden Füllstoffes,
      und
   (X) KEINE leitfähigen oder halbleitfähigen Additive,
   wobei sich die Menge aller Komponenten auf 100 Gew.% addieren,
wobei diese Grundmasse
   - auf ein Substrat aufgebracht oder in eine Form gefüllt wird,
   - in einem ersten Schritt eine Vernetzung durch Erhitzen auf mindestens der Temperatur der 10 h-HWT (= 10 Stunden-Halbwertstemperatur) des Peroxides (B) erfolgt, wobei die Erhitzungsdauer mindestens 0,2 einer HWZ (= Halbwertszeit) des Peroxides (B) bei der gewählten Vernetzungstemperatur entspricht,
   - in einem zweiten Schritt eine Temperung oberhalb der Temperatur der 10 h-HWT des Peroxides (B) erfolgt, wobei die Temperungsdauer mindestens einer HWZ des Peroxides (B) bei der gewählten Temperungstemperatur entspricht.

Um die Seitenzahl der Beschreibung der vorliegenden Erfindung nicht zu umfangreich zu gestalten, werden im Folgenden nur die bevorzugten Ausführungsformen der einzelnen Merkmale aufgeführt. Der fachkundige Leser soll diese Art der Offenbarung aber explizit so verstehen, dass damit auch jede Kombination aus unterschiedlichen Bevorzugungsstufen explizit offenbart und explizit gewünscht ist.

Der Durchgangswiderstand dieser erfindungsgemäßen, vernetzten Siliconelastomere beträgt
- nach 1 Minute: < 1,0 10¹⁵ Ohm*cm; bevorzugt < 8,0 10¹⁴ Ohm*cm; besonders bevorzugt < 5,0 10¹⁴ Ohm*cm;
- nach 15 Minuten: < 3,0 10¹⁵ Ohm*cm; bevorzugt < 2,0 10¹⁵ Ohm*cm; besonders bevorzugt < 8,0 10¹⁴ Ohm*cm;
- nach 10.000 Minuten: < 1,0 10¹⁶ Ohm*cm; bevorzugt < 8,0 10¹⁵ Ohm*cm; besonders bevorzugt < 6,0 10¹⁵ Ohm*cm.

Als Energiequellen für die Vernetzung und Temperung durch Erwärmen werden vorzugsweise Öfen, z. B. Umlufttrockenschränke, Heizkanäle, beheizte Walzen, beheizte Platten, beheizte Formen oder Wärmestrahlen des Infrarotbereiches verwendet.

Es hat sich gezeigt, dass der Durchgangswiderstand der erfindungsgemäßen gehärteten Siliconelastomere nur durch die erfindungsgemäße Menge an Peroxid (B) in Kombination mit den erfindungsgemäßen Vernetzungs- und Temperungsbedingungen robust eingestellt werden kann, obwohl auf den Einsatz von leitfähigen oder halbleitfähigen Additiven (X) verzichtet wird. Es lassen sich weiche Siliconelastomere herstellen, deren vorteilhafte Eigenschaften (Beständigkeit gegenüber elektrischer Alterung, Gasduchlässigkeit, Transluzenz, Elastizität über weite Temperaturbereiche) sich bereits in Wechselspannungsanwendungen gegenüber anderen Werkstoffen durchgesetzt haben. Diese erfindungsgemäße Möglichkeit, nun auch den Durchgangswiderstand robust einzustellen, ermöglicht jetzt, diese Vorteile auch für Gleichspannungsanwendungen zu nutzen.

### Messverfahren zur Durchgangswiderstandsmessung:

Die Messung erfolgt an einem 0,5 mm dicken vernetzten Siliconelastomer, in einer beheizbaren Schutzringanordnung mit einer elektrischen Feldstärke von 1 kV/mm, gemäß der Norm IEC 62631-3-1 "Guidelines for the determination of dielectric and resistive properties of solid insulating materials - Part 3-1: Determination of resistive properties (DC Methods) - Volume resistance and volume resistivity, general method"

Als Messgeräte werden Schutzring-Messzellen der Fa. Tettex Instruments "Solid Test Cell 2914" mit Megohmmeter "Eaton Sefelec 1500-M" bzw. Sefelec M1501 P verwendet.

Es wurde der Durchgangswiderstand gemessen und daraus der spezifische Durchgangswiderstand berechnet.

Bevorzugt erfolgt die Erhitzungsdauer der Vernetzung im ersten Schritt für mindestens eine HWZ des Peroxides (B) bei der gewählten Vernetzungstemperatur, besonders bevorzugt für mindestens zwei HWZ des Peroxides (B) bei der gewählten Vernetzungstemperatur.

In einer bevorzugten Ausführungsform erfolgt die Vernetzung im ersten Schritt bei einer Temperatur von mindestens der 10 h-HWT (= 10 Stunden-Halbwertstemperatur bis höchstens der 1 min-HWT (= 1 Minuten-Halbwertstemperatur) des verwendeten Peroxides (B), besonders bevorzugt bei einer Temperatur von mindestens der 10 h-HWT bis höchstens 10°C unterhalb der 1 min-HWT des verwendeten Peroxides (B).

### Komponente (A)

Der Bestandteil (A) der erfindungsgemäßen Zusammensetzung ist ein Diorganopolysiloxan oder eine Mischung von Diorganopolysiloxanen der allgemeinen Formel (1):

R¹ₐR²₃SiO_{(4-a-b)/2} (1)

R¹ ist ein substituierter oder unsubstituierter einwertiger Kohlenwasserstoffrest, der keine aliphatisch ungesättigten Gruppen enthält. R² ist ein substituierter oder unsubstituierter einwertiger Kohlenwasserstoffrest, der aliphatisch ungesättigt ist.

Die Indizes a und b sind positive Zahlen in dem Bereich 1 ≤ a < 3, 0 ≤ b ≤ 1 und 1 < a + b ≤ 3.

In einer bevorzugten Ausführungsform enthält jedes Molekül im Durchschnitt mindestens zwei an Siliciumatome gebundene ungesättigte Gruppen R².

Insbesondere bedeutet R¹ einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen.

Beispiele für Reste R¹ sind Alkylreste, wie der Methyl-, Ethyl- , n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Bevorzugt handelt es sich bei dem Rest R¹ um einen einwertigen Kohlenwasserstoffrest mit 1 bis 6 Kohlenstoffatomen, wobei der Methylrest besonders bevorzugt ist.

R² bedeutet insbesondere einen einwertigen, SiC-gebundenen Kohlenwasserstoffrest mit aliphatischer Kohlenstoff-Kohlenstoff-Mehrfachbindung.

Beispiele für Reste R² sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest R² um Alkenylreste, wobei der Vinylrest besonders bevorzugt ist.

In einer bevorzugten Ausführungsform ist R¹ eine Methylgruppe und R² eine Vinylgruppe. Die Struktur der Diorganopolysiloxane (A) kann linear oder verzweigt sein, wobei eine lineare Struktur bevorzugt ist. Die Viskosität der Diorganopolysiloxane (A) bei 25°C (bestimmt nach DIN 53018) liegt zwischen 1.000 mPa·s und 50.000.000 mPa·s. In einer bevorzugten Ausführungsform liegt die Viskosität der Diorganopolysiloxane (A) zwischen 500.000 und 40.000.000 mPa·s, noch bevorzugter zwischen 2.000.000 und 30.000.000 mPa·s und damit im Bereich der üblicherweise in hochtemperatur-vernetzenden Kautschuken (HTV) verwendeten Polysiloxane.

In einer anderen Ausführungsform liegt die Viskosität der Diorganopolysiloxane (A) bei 25°C (bestimmt nach DIN 53018) bevorzugt zwischen 1.000 mPa·s und 100.000 mPa·s, noch bevorzugter zwischen 5.000 und 50.000 mPa·s. Polysiloxane in diesem Viskositätsbereich werden üblicherweise für Flüssigsiliconkautschuke (liquid silicone rubber, LSR) verwendet.

Die Diorganopolysiloxane (A) können beispielsweise vinyl-terminierte Polydimethylsiloxane, vinyl-terminierte Polydimethyl-polymethylvinyl-siloxane oder trimethylsilylterminierte Polydimethyl-polymethylvinyl-siloxane sein.

Die Komponente (A) kann aus einem einzigen Diorganopolysiloxan bestehen oder aus Mischungen von zwei oder mehr Diorganopolysiloxanen.
(A) wird in Mengen von 50 Gew.% bis 99 Gew.% eingesetzt, bevorzugt 55 Gew.% bis 85 Gew.%, insbes. 60 Gew.% bis 80 Gew.%.

### Komponente (B)

Als Vernetzer werden Peroxide, die als Quelle für freie Radikale dienen, eingesetzt. Sie werden ausgewählt aus der Gruppe der Dialkylperoxide, Diarylperoxide, Alkylarylperoxide, Aralkylperoxide und Hydroperoxide. Als Komponente (B) kann ein einzelnes Peroxid oder Hydroperoxid eingesetzt werden oder eine Kombination aus verschiedenen Peroxiden oder Peroxiden mit Hydroperoxiden.

Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isonona-noat, Dicyclohexylperoxydicarbonat und 2,5-Dimethyl-hexan-2,5-diperbenzoat.

Im Stand der Technik ist bekannt, dass sich Peroxide in vinylspezifische und nicht vinylspezifische Peroxide unterscheiden lassen. Siehe bspw. das Lehrbuch SILICONES von Pachaly et al, WILEY-CH, ISBN-10:3-527-30770-2, ISBN-13:978-3527-30770-8; Seiten 41 ff.

(B) wird in Mengen von 0,5 bis 5 Gew.-%, bevorzugt von 1 bis 4 Gew.-%, insbesondere bevorzugt von 1,5 bis 3 Gew.-% eingesetzt.

### Peroxide haben Kenngrößen:

### Die Halbwertszeit (HWZ):

Die HWZ eines Peroxids bei einer definierten Temperatur gibt an, nach welcher Zeit die Hälfte der Peroxidmenge zerfallen ist.

Daten zu Halbwertszeiten finden sich in der Literatur, und sie werden von Peroxidherstellern bereitgestellt. Werte zwischen einzelnen Datenpunkten lassen sich über Arrhenius-Kinetik extrapolieren.

### 10 h-HWT:

Die 10-Stunden-Halbwertstemperatur ist die Temperatur, bei der die Hälfte der Peroxidmenge innerhalb von 10 Stunden zerfallen ist.

### 1 min-HWT:

Die 1-Minute-Halbwertstemperatur ist die Temperatur, bei der die Hälfte der Peroxidmenge innerhalb von einer Minute zerfallen ist.

In einer bevorzugten Ausführungsform wird als Komponente (A) ein vinylhaltiges Diorganopolysiloxan und als Komponente (B) ein vinylspezifisches Peroxid eingesetzt.

### Verstärkende Füllstoffe (C)

Verstärkende Füllstoffe (C), die eingesetzt werden können, sind pyrogene oder gefällte Kieselsäuren mit BET-Oberflächen von mindestens 50 m²/g.

Die genannten aktiv verstärkenden Kieselsäurefüllstoffe (C) können hydrophilen Charakter haben oder nach bekannten Verfahren hydrophobiert sein.

Bevorzugt sind gefällte und pyrogene Kieselsäuren sowie Gemische derselben. Besonders bevorzugt sind mit Silyliermittel oberflächenbehandelte pyrogene Kieselsäure. Die Methoden zur Hydrophobierung sind dem Fachmann seit langem im Stand der Technik bekannt. Die Hydrophobierung der Kieselsäure kann entweder vor der Einarbeitung in das Polyorganosiloxan erfolgen oder auch in Gegenwart eines Polyorganosiloxans nach dem insitu-Verfahren. Beide Verfahren können sowohl im Batch-Prozess als auch kontinuierlich durchgeführt werden. Als Silylier-Agenzien können alle dem Fachmann bekannten Hydrophobiermittel verwendet werden. Diese sind vorzugsweise Silazane, insbesondere Hexamethyldisilazan und/oder 1,3-Divinyl-1,1,3,3-tetramethyldisilazan, und/oder Polysilazane, wobei auch zusätzlich Wasser eingesetzt werden kann. Zusätzlich können auch andere Silylier-Agenzien, wie beispielsweise SiOH- und/oder SiCl- und/oder Alkoxy-funktionelle Silane beziehungsweise Siloxane als Hydrophobiermittel verwendet werden. Ebenso können zyklische, lineare oder verzweigte nicht-funktionelle Organosiloxane, wie beispielsweise Octamethylcyclotetrasiloxan oder Polydimethylsiloxan, jeweils für sich genommen oder zusätzlich zu Silazanen als Silylier-Agenzien eingesetzt werden. Um die Hydrophobierung zu beschleunigen, ist auch der Zusatz von katalytisch aktiven Additiven, wie beispielsweise Hydroxiden, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugt sind gefällte oder pyrogene Kieselsäuren. Besonders bevorzugt ist eine Kieselsäure mit einer spezifischen Oberfläche nach BET von 80-400 ²/g, besonders bevorzugt 100-400 m²/g.

Aktiv verstärkende Kieselsäurefüllstoffe (C) können einzeln oder als Mischungen eingesetzt werden.

Der Gehalt an verstärkendem Füllstoff (C) liegt im Bereich von 0 bis 50 Gew.-%, vorzugsweise bei 15 bis 45 Gew.-%, bevorzugt bei 20 bis 40 Gew.-%.

### Weitere Bestandteile (D)

Weitere Bestandteile sind dem Fachmann seit langem aus dem Stand der Technik bekannt, die bei den erfindungsgemäßen Zusammensetzungen verwendet werden können. Nicht beschränkende Beispiele sind nicht verstärkende Füllstoffe, Weichmacher, Haftvermittler, lösliche Farbstoffe, anorganische und organische Pigmente, Lösungsmittel, Fungicide, Duftstoffe, Dispergierhilfsmittel, rheologische Additive, Korrosionsinhibitoren, Oxidationsinhibitoren, Lichtschutzmittel Hitzestabilisatoren, flammabweisend machende Mittel.

### Bestandteil (X)

Es sind KEINE leitfähigen oder halbleitfähigen Additive (X) in der erfindungsgemäßen Grundmasse enthalten. KEINE bedeutet, dass solche Additive aber bis zu der für Verunreinigung üblichen Größenordnung enthalten sein können. Solche Additive sind dem Fachmann seit langem bekannt. Beispiele sind Ruße, Metalle, Metalloxide, Halbleiter (wie bspw. SiC, Si) in Form von Nanopartikeln.

**Ein weiterer Gegenstand der vorliegenden Erfindung ist das Verfahren zur Herstellung der erfindungsgemäßen vernetzten Siliconelastomere,** deren Durchgangswiderstand auf den Durchgangswiderstand einer angrenzenden Kabelisolierung eingestellt wird,
wobei dieser Durchgangswiderstand an einem 0,5 mm dicken vernetzten Siliconelastomer, in einer beheizbaren Schutzringanordnung mit einer elektrischen Feldstärke von 1 kV/mm, gemäß Standard IEC 62631-3-1 bestimmt wird und folgenden Wert nach Anlegen der Prüfspannung erfüllt:
   - nach 10.000 Minuten: < 1,0 1016 Ohm*cm,
erhältlich durch Vernetzung einer Grundmasse enthaltend:
   (A) 50 bis 99 Gew.% wenigstens eines Diorganopolysiloxanes mit mindestens 2 vernetzungsfähigen Gruppen pro Molekül,
   (B) 0,5 bis 5 Gew.% wenigstens eines Peroxids,
   (C) 0 bis 50 Gew.% wenigstens eines verstärkenden Füllstoffes, und
   (X) KEINE leitfähigen oder halbleitfähigen Additive,
wobei sich die Menge aller Komponenten auf 100 Gew.% addieren,
wobei diese Grundmasse
   - auf ein Substrat aufgebracht oder in eine Form gefüllt wird,
   - in einem ersten Schritt eine Vernetzung durch Erhitzen auf mindestens der Temperatur der 10 h-HWT (= 10-Stunden-Halbwertstemperatur) des Peroxides (B) erfolgt, wobei die Erhitzungsdauer mindestens 0,2 einer HWZ (= Halbwertszeit) des Peroxides (B) bei der gewählten Vernetzungstemperatur entspricht,
   - in einem zweiten Schritt eine Temperung oberhalb der Temperatur der 10 h-HWT des Peroxides (B) erfolgt, wobei die Temperungsdauer mindestens einer HWZ des Peroxides (B) bei der gewählten Temperungstemperatur entspricht.

**Ein weiterer Gegenstand der vorliegenden Erfindung ist die Verwendung vernetzter Siliconelastomere für** Iolierungsanwendungen, insbesondere für HVDC-Anwendungen wie HVDC-Garnituren.

### Beispiele

Die nachfolgenden Beispiele beschreiben die prinzipielle Ausführbarkeit der vorliegenden Erfindung, ohne jedoch diese auf die darin offenbarten Inhalte zu beschränken.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Die erfindungsgemäße Zusammensetzung kann durch einfaches Mischen der Bestandteile in einem für Siliconkautschuk-Zusammensetzungen üblicherweise verwendeten Mischaggregat (Balkenrührer, Flügelrührer, Kneter, Extruder, Zweiwalzenstuhl) hergestellt werden.

Es bedeutet im Folgenden und in den Tabellen:
E13 = 10¹³
E14 = 10¹⁴
E15 = 10¹⁵
E16 = 10¹⁶
HWZ = Halbwertszeit
**Peroxide = Vernetzer**

**Vernetzer 1:** Vernetzer 1 ist Dicumylperoxid mit folgenden Kenngrößen:
10 h-HWT: 111 °C
1 min-HWT: 168 °C
Halbwertszeit bei 120 °C: ~ 5,3 Stunden
Halbwertszeit bei 130 °C: ~ 1,6 Stunden
Halbwertszeit bei 140 °C: ~ 0,5 Stunden
Halbwertszeit bei 165 °C: ~ 1,5 Minuten

**Vernetzer 2:** Vernetzer 2 ist eine 50%ige Paste aus 2,5-Dimethyl-2,5-Bis(t-butylperoxy)hexan in Siliconöl mit folgenden Kenngrößen:
10 h-HWT: 116 °C
1 min-HWT: 176 °C

**Vernetzer 3:** Vernetzer 3 ist eine 50%ige Paste aus Bis(4-methylbezoyl)peroxid in Siliconöl.
10 h-HWT: 70 °C
1 min-HWT: 130 °C

**Vernetzer 4:** Vernetzer 4 ist eine 50%ige Paste aus Bis-(2,4-dichlorbenzoyl)-peroxid mit folgenden Kenngrößen:
10 h-HWT: 51 °C
1 min-HWT: 119 °C

### Basisgrundmasse 1:

In einem Laborkneter wurden 750 g eines vinyldimethylsiloxyterminierten Polydimethylsiloxans (PDMS) mit einer Viskosität von 20.000 mPas (25°C) vorgelegt, auf 150°C aufgeheizt und mit 550 g einer hydrophoben pyrogenen Kieselsäure mit einer spezifischen Oberfläche nach BET von 300 m²/g und einem Kohlenstoffgehalt von 3,9 Gew.-% versetzt. Es entstand eine hochviskose Masse, die anschließend mit 300 g eines vinyldimethylsiloxy-terminierten Polydimethylsiloxans mit einer Viskosität von 20.000 mPas (25°C) verdünnt wurde. Durch Kneten unter Vakuum (10 mbar) bei 150°C wurden innerhalb einer Stunde flüchtige Bestandteile entfernt.

### Basisgrundmasse 2:

In einem Kneter wurden 100 Teile eines Dimethylvinylsilyloxyterminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 41 Teilen Kieselsäure mit einer Oberfläche, gemessen nach der BET Methode, von 300 m2/g und 7 Teilen eines Dimethylhydroxysiloxy-terminierten Dimethylsiloxan Oligomers mit einer Viskosität von 40 mPa·s bis zur Homogenität vermischt und zwei Stunden auf 170°C erhitzt.

### Beispiel 1 (nicht erfindungsgemäß):

Zu 80,0 g der Basisgrundmasse 1 wurden bei 25 °C 18,7 g vinyldimethylsiloxy-terminiertes Polydimethylsiloxan mit einer Viskosität von 20.000 mPa·s (25°C), 0,1 g Ethinylcyclohexanol, 1,9 g eines Mischpolymerisats aus Dimethylsiloxy-, Methylhydrogensiloxy- und Trimethylsiloxy-Einheiten mit einer Viskosität von 300 mPa·s bei 25°C und einem SiH-Gehalt von 0,47% und 0,1 g einer Lösung, die einen Platin-sym-Divinyltetramethyldisiloxan-Komplex und 1 Gew.-% Platin enthält, hinzugefügt. Die Masse wurde mit einem Flügelrührer homogen vermischt und anschließend in einem Exsikkator entgast (10 min bei etwa 10 mbar).

Die auf diese Weise hergestellte Siliconmasse wurde anschließend in einer hydraulischen Presse entsprechend der in der Tabelle angegebenen Temperatur und Zeit vernetzt. Die entformten, 0,5 mm dicken Siliconelastomerfolien wurden anschließend entsprechend der in der Tabelle angegebenen Bedingungen in einem Umluftofen getempert. Anschließend wurde der Durchgangswiderstand nach der beschriebenen Methode bestimmt.

**Tabelle 1: Verarbeitungsbedingungen und Daten zum Durchgangswiderstand für Beispiel 1 a) und b)**

| | Beispiel 1 a) | Beispiel 1 b) |
|---|---|---|
| Vernetzung | 5 min, 165 °C | 30 min, 100 °C |
| Temperung | 4 h, 200 °C | 24 h, 120 °C |
| | | |
| Durchgangswiderstand nach 1 min in Ohm.cm | 2,8 E15 | 3,3 E15 |
| Durchgangswiderstand nach 15 min in Ohm.cm | 6,0 E15 | 5,7 E15 |
| Durchgangswiderstand nach 10000 min in Ohm.cm | 4,1 E16 | 3,6 E16 |

### Beispiel 2

Zu 80,0 g der Basisgrundmasse 1 wurden bei 25 °C 20,0 g vinyldimethylsiloxy-terminiertes Polydimethylsiloxan mit einer Viskosität von 20.000 mPa·s (25°C) sowie die in der Tabelle 2 angegebene Menge an Peroxid hinzugefügt. Die Masse wurde mit einem Flügelrührer homogen vermischt und anschließend in einem Exsikkator entgast (10 min bei etwa 10 mbar).

Die auf diese Weise hergestellte Siliconmasse wurde anschließend in einer hydraulischen Presse entsprechend der in der Tabelle 2 angegebenen Temperatur und Zeit vernetzt. Die entformten, 0,5 mm dicken Siliconelastomerfolien wurden anschließend entsprechend der in der Tabelle angegebenen Bedingungen in einem Umluftofen getempert. Anschließend wurde der Durchgangswiderstand nach der beschriebenen Methode bestimmt.

**Tabelle 2: Peroxidmenge, Verarbeitungsbedingungen und Durchgangswiderstand für Beispiel 2 a) bis 2c)**

| | Beispiel 2a | Beispiel 2b | Beispiel 2c |
|---|---|---|---|
| Vernetzer 1 | 0,6 g | 2,0 g | 3,0 g |
| | | | |
| Vernetzung | 15 min 165 °C | 15 min 165 °C | 15 min 165 °C |
| Temperung | 24 h 120 °C | 24 h 120 °C | 24 h 120 °C |
| | | | |
| Durchgangswiderstand nach 1 min in Ohm.cm | 5,3 E14 | 1,1 E14 | 4,5 E13 |
| Durchgangswiderstand nach 15 min in Ohm.cm | 1,1 E15 | 2,6 E14 | 1,2 E14 |
| Durchgangswiderstand nach 10000 min in Ohm.cm | 5,5 E15 | 1,3 E15 | 6,8 E14 |

### Beispiel 3

Zu 80,0 g der Basisgrundmasse 1 wurden bei 25 °C 20,0 g vinyldimethylsiloxy-terminiertes Polydimethylsiloxan mit einer Viskosität von 20.000 mPa·s (25°C) sowie die in der Tabelle 3 angegebene Menge an Peroxid hinzugefügt. Die Masse wurde mit einem Flügelrührer homogen vermischt und anschließend in einem Exsikkator entgast (10 min bei etwa 10 mbar).

Die auf diese Weise hergestellte Siliconmasse wurde anschließend in einer hydraulischen Presse entsprechend der in der Tabelle 3 angegebenen Temperatur und Zeit vernetzt. Die entformten, 0,5 mm dicken Siliconelastomerfolien wurden anschließend entsprechend der in der Tabelle angegebenen Bedingungen in einem Umluftofen getempert. Anschließend wurde der Durchgangswiderstand nach der beschriebenen Methode bestimmt.

**Tabelle 3: Peroxidart und -menge, Verarbeitungsbedingungen und Durchgangswiderstand (Angabe in Ohm.cm) für Beispiel 3 a) bis 3 c)**

| | Beispiel 3a | Beispiel 3b | Beispiel 3c |
|---|---|---|---|
| Vernetzer 1 | 2,0 g | - | - |
| Vernetzer 2 | - | 4,0 g (entspricht 2,0 g reines Peroxid) | - |
| Vernetzer 3 | - | - | 2,0 g (entspricht 1,0 g reines Peroxid) |
| | | | |
| Vernetzung | 16 h 130 °C | 16 h 130 °C | 16 h 130 °C |
| Temperung | 24 h 120 °C | 24 h 120 °C | 24 h 120 °C |
| | | | |
| Durchgangswiderstand nach 1 min in Ohm.cm | 5,4 E13 | 7,4 E13 | 7,2 E14 |
| Durchgangswiderstand nach 15 min in Ohm.cm | 1,5 E14 | 1,3 E14 | 1,6 E15 |
| Durchgangswiderstand nach 10000 min in Ohm.cm | 8,2 E14 | 7,2 E14 | 8,1 E15 |

### Beispiel 4

Die in Tabelle 4 angegebenen Bestandteile wurden mit einem Flügelrührer homogen vermischt und anschließend in einem Exsikkator entgast (10 min bei etwa 10 mbar).

Die auf diese Weise hergestellte Siliconmasse wurde anschließend in einer hydraulischen Presse entsprechend der in der Tabelle 4 angegebenen Temperatur und Zeit vernetzt. Die entformten, 0,5 mm dicken Siliconelastomerfolien wurden anschließend entsprechend der in der Tabelle 4 angegebenen Bedingungen in einem Umluftofen getempert. Anschließend wurde der Durchgangswiderstand bestimmt.

**Tabelle 4: Zusammensetzung, Verarbeitungsbedingungen und Durchgangswiderstand (Angabe in Ohm.cm) für Beispiel 4 a) bis 4 d)**

| | Beispiel 4a | Beispiel 4b | Beispiel 4c | Beispiel 4d |
|---|---|---|---|---|
| Basisgrundmasse 1 | 100,0 g | 50,0 g | 0 | 80,0 g |
| Vinyl-terminiertes PDMS; Viskosität 20.000 mPa.s | 0 | 50,0 g | 100,0 g | |
| Trimethylsilyl-terminiertes PDMS mit Viskosität 100 mPa.s (25°C) | 0 | | | 20,0 g |
| Vernetzer 1 | 2,0 g | | 2,0 g | 2,0 g |
| Vernetzer 2 | | 4,0 g | | |
| | | | | |
| Vernetzung | 15 min 165 °C | 15 min 165 °C | 15 min 165 °C | 16 h 130 °C |
| Temperung | 24 h 140 °C | 4 h 200 °C | 24 h 140 °C | 24 h 120 °C |
| | | | | |
| Durchgangswiderstand nach 1 min in Ohm.cm | 7,0 E13 | 4,0 E14 | 6,8 E14 | 3,0 E13 |
| Durchgangswiderstand nach 15 min in Ohm.cm | 1,8 E14 | 8,2 E14 | 1,2 E15 | 8,7 E13 |
| Durchgangswiderstand nach 10000 min in Ohm.cm | 1,0 E15 | 4,1 E15 | 2,8 E15 | 6,8 E14 |

### Beispiel 5

Auf einer Walze wurde eine Mischung aus 100 g der Basisgrundmasse 2 und 4,0 g Vernetzer 2 hergestellt. Die auf diese Weise hergestellte Siliconmasse wurde anschließend in einer hydraulischen Presse bei 165 °C für 15 Minuten vernetzt. Die entformten, 0,5 mm dicken Siliconelastomerfolien wurden anschließend für 4 Stunden bei 200 °C in einem Umluftofen getempert. Anschließend wurde der Durchgangswiderstand nach der beschriebenen Methode bestimmt.

### Beispiel 6

Auf einer Walze wurde eine Mischung aus 100 g eines Polydimethylsiloxans mit einem Polymerisationsgrad von etwa 6000 Siloxyeinheiten und 1,5 g Vernetzer 4 hergestellt. Die auf diese Weise hergestellte Siliconmasse wurde anschließend in einer hydraulischen Presse bei 165 °C für 15 Minuten vernetzt. Die entformten, 0,5 mm dicken Siliconelastomerfolien wurden anschließend für 8 Stunden bei 200 °C in einem Umluftofen getempert. Anschließend wurde der Durchgangswiderstand nach der beschriebenen Methode bestimmt.

**Tabelle 5: Durchgangswiderstand für Beispiel 5 und Beispiel 6**

| | Beispiel 5 | Beispiel 6 |
|---|---|---|
| Durchgangswiderstand nach 1 min in Ohm.cm | 3,1 E14 | 4,7 E14 |
| Durchgangswiderstand nach 15 min in Ohm.cm | 6,6 E14 | 8,6 E14 |
| Durchgangswiderstand nach 10000 min in Ohm.cm | 3,4 E15 | 3,0 E15 |

### Beispiel 7

Zu 80,0 g der Basisgrundmasse 1 wurden bei 25 °C 20,0 g vinyldimethylsiloxy-terminiertes Polydimethylsiloxan mit einer Viskosität von 20.000 mPa·s (25°C) und 2,0 g Vernetzer 1 hinzugefügt. Die Masse wurde mit einem Flügelrührer homogen vermischt und anschließend in einem Exsikkator entgast (10 min bei etwa 10 mbar).

Die auf diese Weise hergestellte Siliconmasse wurde anschließend in einer hydraulischen Presse entsprechend der in der Tabelle angegebenen Temperatur und Zeit vernetzt. Die entformten, 0,5 mm dicken Siliconelastomerfolien wurden anschließend entsprechend der in der Tabelle angegebenen Bedingungen in einem Umluftofen getempert. Anschließend wurde der Durchgangswiderstand nach der beschriebenen Methode bestimmt.

**Tabelle 6: Verarbeitungsbedingungen und Durchgangswiderstände für Beispiel 7 a) - d) sowie 7e) -g)**

| | Beispiel 7a | Beispiel 7b | Beispiel 7c | Beispiel 7d |
|---|---|---|---|---|
| Vernetzung | 130 °C 30 Minuten (~ 0,3 mal HWZ) | 130 °C 2 Stunden (1,25 mal HWZ) | 130 °C 4 Stunden (2,5 mal HWZ) | 130 °C 16 Stunden (10 mal HWZ) |
| Temperung | 24 h 120 °C | 24 h 120 °C | 24 h 120 °C | 24 h 120 °C |
| | | | | |
| Durchgangswiderstand nach 1 min in Ohm.cm | 1,0 E15 | 2,0 E14 | 7,2 E13 | 7,2 E13 |
| Durchgangswiderstand nach 15 min in Ohm.cm | 1,9 E15 | 7,1 E14 | 2,5 E14 | 1,4 E14 |
| Durchgangswiderstand nach 10000 min in Ohm.cm | 8,2 E15 | 4,9 E15 | 2,1 E15 | 9,0 E14 |

| | Beispiel 7e | Beispiel 7f | Beispiel 7 |
|---|---|---|---|
| Vernetzung | 140 °C 30 Minuten (~ 1 mal HWZ) | 140 °C 1 Stunde (2 mal HWZ) | 140 °C 2 Stunden (4 mal HWZ) |
| Temperung | 24 h 120 °C | 24 h 120 °C | 24 h 120 °C |
| | | | |
| Durchgangswiderstand nach 1 min in Ohm.cm | 4,3 E14 | 1,3 E14 | 4,5 E13 |
| Durchgangswiderstand nach 15 min in Ohm.cm | 9,1 E14 | 2,9 E14 | 1,6 E14 |
| Durchgangswiderstand nach 10000 min in Ohm.cm | 6,1 E15 | 2,0 E15 | 1,1 E15 |

### Beispiel 8

Die Prüfplatte aus Beispiel 7 c) wurde nach der Bestimmung des Durchgangswiderstands dicht in Aluminiumfolie verpackt und bei 80 °C gelagert. Nach der in der Tabelle angegebenen Lagerungsdauer wurde die Prüfplatte aus dem Ofen entnommen und der Wert für den Durchgangswiderstand (15 min Messung) ermittelt. Anschließend wurde die Platte wieder in Aluminiumfolie verpackt und bei 80 °C weiter gelagert.

**Tabelle 7: Lagerungsdauer und Durchgangswiderstand für Beispiel 8.**

| Lagerungsdauer (Stunden) | Durchgangswiderstand nach 15 min in Ohm.cm |
|---|---|
| 0 | 3,7 E14 |
| 168 | 3,5 E14 |
| 340 | 3,2 E14 |
| 500 | 3,6 E14 |
| 1430 | 3,8 E14 |

### Beispiel 9

Die Prüfplatte aus 3 a wurde in der Messzelle für die Durchgangswiderstandsmessung belassen und der Durchgangswiderstand (bei 1 kV/mm und 90 °C) nach den in Tabelle 9 angegeben Zeiten gemessen.

**Tabelle 9: Dauer der elektrothermischen Lagerung und Durchgangswiderstände (gemessen bei 1 kV/mm und 90 °C)**

| Lagerungsdauer (Minuten) | Durchgangswiderstand in Ohm.cm |
|---|---|
| 10000 (siehe Bsp. 3 a) | 8,2 E14 |
| 14400 | 8,7 E14 |
| 18750 | 8,9 E14 |
| 30150 | 8,8 E14 |

**Tabelle 10: Zusammensetzung der erfindungsgemäßen Beispiele**

| Beispiel | Siliconpolymer [Gew.%] | Kieselsäure [Gew.%] | Peroxid [Gew.%] |
|---|---|---|---|
| 2a | 72,1 | 27,3 | 0, 6 |
| 2b | 71,0 | 27,0 | 2,0 |
| 2c | 70, 4 | 26,7 | 2, 9 |
| 3a | 71,0 | 27,0 | 2,0 |
| 3b | 71, 6 | 26,4 | 1, 9 |
| 3c | 71,0 | 27,0 | 1,0 |
| 4a | 64,3 | 33,7 | 2,0 |
| 4b | 81, 6 | 16,5 | 1, 9 |
| 4c | 98, 0 | 0 | 2,0 |
| 4d | 71,0 | 27,0 | 2,0 |
| 5 | 71, 4 | 26,6 | 1, 9 |
| 6 | 97,3 | 0 | 0,7 |
| 7a, b, c, d | 71,0 | 27,0 | 2,0 |
| 8 und 9 | 71,0 | 27,0 | 2,0 |

Für ausgewählte Beispiele wurden entsprechend den in den Beispielen angegeben Bedingungen Prüfplatten zur Herstellung von Mechanikprüfkörpern gefertigt. Die Ergebnisse der Messungen sind in Tabelle 11 zusammengefasst. Die Bestimmung der mechanischen Eigenschaften erfolgte mittels Standardmessmethoden.

**Tabelle 11: Mechanische Eigenschaften für ausgewählte Beispiele**

| | Härte Shore A | Reißfestigkeit [N/mm²] | Reißdehnung [%] | Weiterreißwiderstand [N/mm] |
|---|---|---|---|---|
| 2a | 35 | 8,3 | 550 | 18 |
| 2b | 37 | 8, 4 | 500 | 18 |
| 2c | 38 | 9, 0 | 500 | 17 |
| 3a | 38 | 8,5 | 530 | 18 |
| 4d | 22 | 6, 8 | 630 | 17 |
| 7d | 37 | 8, 4 | 500 | 18 |

## Patentansprüche

1. Vernetzte Siliconelastomere, deren Durchgangswiderstand auf den Durchgangswiderstand einer angrenzenden Kabelisolierung eingestellt wurde,
wobei dieser Durchgangswiderstand an einem 0,5 mm dicken vernetzten Siliconelastomer, in einer beheizbaren Schutzringanordnung mit einer elektrischen Feldstärke von 1 kV/mm, gemäß Standard IEC 62631-3-1 bestimmt wird und folgenden Wert nach Anlegen der Prüfspannung erfüllt:
- nach 10.000 Minuten: < 1,0 10¹⁶ Ohm*cm,
erhältlich durch Vernetzung einer Grundmasse enthaltend:
(A) 50 bis 99 Gew.% wenigstens eines Diorganopolysiloxanes mit mindestens 2 vernetzungsfähigen Gruppen pro Molekül,
(B) 0,5 bis 5 Gew.% wenigstens eines Peroxids,
(C) 0 bis 50 Gew.% wenigstens eines verstärkenden Füllstoffes,
und
(X) KEINE leitfähigen oder halbleitfähigen Additive,
wobei sich die Menge aller Komponenten auf 100 Gew.% addieren,
wobei diese Grundmasse
- auf ein Substrat aufgebracht oder in eine Form gefüllt wird,
- in einem ersten Schritt eine Vernetzung durch Erhitzen auf mindestens der Temperatur der 10 h-HWT (= 10-Stunden-Halbwertstemperatur) des Peroxides (B) erfolgt, wobei die Erhitzungsdauer mindestens 0,2 einer HWZ (= Halbwertszeit) des Peroxides (B) bei der gewählten Vernetzungstemperatur entspricht,
- in einem zweiten Schritt eine Temperung oberhalb der Temperatur der 10 h-HWT des Peroxides (B) erfolgt, wobei die Temperungsdauer mindestens einer HWZ des Peroxides (B) bei der gewählten Temperungstemperatur entspricht.

2. Vernetzte Siliconelastomere gemäß Anspruch 1, **dadurch gekennzeichnet, dass** die Erhitzungsdauer der Vernetzung im ersten Schritt mindestens einer HWZ des Peroxides (B) bei der gewählten Vernetzungstemperatur entspricht.

3. Vernetzte Siliconelastomere gemäß Anspruch 1, **dadurch gekennzeichnet, dass** die Erhitzungsdauer der Vernetzung im ersten Schritt mindestens zwei HWZ des Peroxides (B) bei der gewählten Vernetzungstemperatur entspricht.

4. Vernetzte Siliconelastomere gemäß einem der Ansprüche 1 bis 3, **dadurch gekennzeichnet, dass** die Vernetzung im ersten Schritt bei einer Temperatur von mindestens der 10 h-HWT bis höchstens der 1 min-HWT (= 1-Minuten-Halbwertstemperatur) des Peroxides (B) erfolgt.

5. Vernetzte Siliconelastomere gemäß einem der Ansprüche 1 bis 3, **dadurch gekennzeichnet, dass** die Vernetzung im ersten Schritt bei einer Temperatur von mindestens der 10 h-HWT bis höchstens 10°C unterhalb der 1 min-HWT des Peroxides (B) erfolgt.

6. Vernetzte Siliconelastomere gemäß einem der Ansprüche 1 bis 5, **dadurch gekennzeichnet, dass** die Grundmasse als (C) 15 bis 45 Gew.% wenigstens einer pyrogenen oder gefällten Kieselsäure mit BET-Oberflächen von mindestens 50 m²/g enthält.

7. Vernetzte Siliconelastomere gemäß einem der Ansprüche 1 bis 6, **dadurch gekennzeichnet, dass** 1 bis 4 Gew.% wenigstens eines Peroxids (B) enthalten sind.

8. Vernetzte Siliconelastomere gemäß einem der Ansprüche 1 bis 7, **dadurch gekennzeichnet, dass** als Komponente (A) ein vinylhaltiges Diorganopolysiloxan und als Komponente (B) ein vinylspezifisches Peroxid eingesetzt wird.

9. Vernetzte Siliconelastomere gemäß einem der Ansprüche 1 bis 8, wobei der Durchgangswiderstand
- nach 10.000 Minuten: < 8,0 10¹⁵ Ohm*cm,
beträgt.

10. Vernetzte Siliconelastomere gemäß einem der Ansprüche 1 bis 8, wobei der Durchgangswiderstand
- nach 10.000 Minuten: < 6,0 10¹⁵ Ohm*cm,
beträgt.

11. Verfahren zur Herstellung vernetzter Siliconelastomere, deren Durchgangswiderstand auf den Durchgangswiderstand einer angrenzenden Kabelisolierung eingestellt wird,
wobei dieser Durchgangswiderstand an einem 0,5 mm dicken vernetzten Siliconelastomer, in einer beheizbaren Schutzringanordnung mit einer elektrischen Feldstärke von 1 kV/mm, gemäß Standard IEC 62631-3-1 bestimmt wird und folgenden Wert nach Anlegen der Prüfspannung erfüllt:
- nach 10.000 Minuten: < 1,0 10¹⁶ Ohm*cm,
erhältlich durch Vernetzung einer Grundmasse enthaltend:
(A) 50 bis 99 Gew.% wenigstens eines Diorganopolysiloxanes mit mindestens 2 vernetzungsfähigen Gruppen pro Molekül,
(B) 0,5 bis 5 Gew.% wenigstens eines Peroxids,
(C) 0 bis 50 Gew.% wenigstens eines verstärkenden Füllstoffes,
und
(X) KEINE leitfähigen oder halbleitfähigen Additive,
wobei sich die Menge aller Komponenten auf 100 Gew.% addieren,
wobei diese Grundmasse
- auf ein Substrat aufgebracht oder in eine Form gefüllt wird,
- in einem ersten Schritt eine Vernetzung durch Erhitzen auf mindestens der Temperatur der 10 h-HWT (= 10-Stunden-Halbwertstemperatur) des Peroxides (B) erfolgt, wobei die Erhitzungsdauer mindestens 0,2 einer HWZ (= Halbwertszeit) des Peroxides (B) bei der gewählten Vernetzungstemperatur entspricht,
- in einem zweiten Schritt eine Temperung oberhalb der Temperatur der 10 h-HWT des Peroxides (B) erfolgt, wobei die Temperungsdauer mindestens einer HWZ des Peroxides (B) bei der gewählten Temperungstemperatur entspricht.

12. Verwendung vernetzter Siliconelastomere gemäß Anspruch 1 bis 10 für Isolierungsanwendungen.

13. Verwendung gemäß Anspruch 12 für HVDC-Anwendungen.

14. Verwendung gemäß Anspruch 12 für HVDC-Garnituren.

## Claims

1. A crosslinked silicone elastomer having a volume resistance adjusted to the volume resistance of an adjacent cable insulation,
this volume resistance being determined on a crosslinked silicone elastomer 0.5 mm thick, in a heatable guard ring arrangement with an electrical field strength of 1 kV/mm, in accordance with standard IEC 62631-3-1 and meeting the following value after application of the test voltage:
- after 10 000 minutes: < 1.0 10¹⁶ ohm*cm,
obtainable by crosslinking a base composition containing:
(A) 50% to 99% by weight of at least one diorganopolysiloxane
having at least 2 crosslinkable groups per molecule,
(B) 0.5% to 5% by weight of at least one peroxide,
(C) 0% to 50% by weight of at least one reinforcing filler,
and
(X) NO conductive or semiconductive additives,
the amount of all the components adding up to 100% by weight,
wherein this base composition
- is applied to a substrate or filled into a mold,
- in a first step, crosslinking takes place by heating to at least the temperature of the 10 h HLT (= 10 hour half-life temperature) of the peroxide (B), the heating duration corresponding to at least 0.2 of an HL (= half-life) of the peroxide (B) at the chosen crosslinking temperature,
- in a second step, heat treatment takes place above the temperature of the 10 h HLT of the peroxide (B), the heat treatment duration corresponding to at least one HL of the peroxide (B) at the chosen heat treatment temperature.

2. The crosslinked silicone elastomer as claimed in claim 1, **characterized in that** the heating duration of the crosslinking in the first step corresponds to at least one HL of the peroxide (B) at the chosen crosslinking temperature.

3. The crosslinked silicone elastomer as claimed in claim 1, **characterized in that** the heating duration of the crosslinking in the first step corresponds to at least two HLs of the peroxide (B) at the chosen crosslinking temperature.

4. The crosslinked silicone elastomer as claimed in any of claims 1 to 3, **characterized in that** the crosslinking in the first step takes place at a temperature of at least the 10 h HLT to at most the 1 min HLT (= 1 minute half-life temperature) of the peroxide (B).

5. The crosslinked silicone elastomer as claimed in any of claims 1 to 3, **characterized in that** the crosslinking in the first step takes place at a temperature of at least the 10 h HLT to at most 10°C below the 1 min HLT of the peroxide (B).

6. The crosslinked silicone elastomer as claimed in any of claims 1 to 5, **characterized in that** the base composition contains as (C) 15% to 45% by weight of at least one fumed or precipitated silica having BET surface areas of at least 50 m²/g.

7. The crosslinked silicone elastomer as claimed in any of claims 1 to 6, **characterized in that** there are 1% to 4% by weight of at least one peroxide (B) included.

8. The crosslinked silicone elastomer as claimed in any of claims 1 to 7, **characterized in that** a vinyl-containing diorganopolysiloxane is used as component (A) and a vinyl-specific peroxide as component (B).

9. The crosslinked silicone elastomer as claimed in any of claims 1 to 8, wherein the volume resistance is
- after 10 000 minutes: < 8.0 10¹⁵ ohm*cm.

10. The crosslinked silicone elastomer as claimed in any of claims 1 to 8, wherein the volume resistance is
- after 10 000 minutes: < 6.0 10¹⁵ ohm*cm.

11. A method for producing crosslinked silicone elastomers having a volume resistance which is adjusted to the volume resistance of an adjacent cable insulation, this volume resistance being determined on a crosslinked silicone elastomer 0.5 mm thick, in a heatable guard ring arrangement with an electrical field strength of 1 kV/mm, in accordance with standard IEC 62631-3-1 and meeting the following value after application of the test voltage:
- after 10 000 minutes: < 1.0 10¹⁶ ohm*cm,
obtainable by crosslinking a base composition containing:
(A) 50% to 99% by weight of at least one diorganopolysiloxane
having at least 2 crosslinkable groups per molecule,
(B) 0.5% to 5% by weight of at least one peroxide,
(C) 0% to 50% by weight of at least one reinforcing filler,
and
(X) NO conductive or semiconductive additives,
the amount of all the components adding up to 100% by weight,
wherein this base composition
- is applied to a substrate or filled into a mold,
- in a first step, crosslinking takes place by heating to at least the temperature of the 10 h HLT (= 10 hour half-life temperature) of the peroxide (B), the heating duration corresponding to at least 0.2 of an HL (= half-life) of the peroxide (B) at the chosen crosslinking temperature,
- in a second step, heat treatment takes place above the temperature of the 10 h HLT of the peroxide (B), the heat treatment duration corresponding to at least one HL of the peroxide (B) at the chosen heat treatment temperature.

12. The use of crosslinked silicone elastomers as claimed in claim 1 to 10 for insulation applications.

13. The use as claimed in claim 12 for HVDC applications.

14. The use as claimed in claim 12 for HVDC fittings.

## Revendications

1. Élastomères réticulés de silicone, dont la résistance de contact a été adaptée à la résistance de contact d'une isolation de câble adjacente,
cette résistance de contact étant déterminée sur un élastomère réticulé de silicone d'une épaisseur de 0,5 mm dans un agencement à bague de protection pouvant être chauffé à l'aide d'un champ électrique de 1 kV/mm, selon la norme IEC 62631-3-1 et respectant la valeur suivante après application de la tension de test :
- après 10.000 minutes : < 1,0 10¹⁶ Ohm*cm,
pouvant être obtenus par réticulation d'une masse de base contenant :
(A) 50 à 99% en poids d'au moins un diorganopolysiloxane présentant au moins 2 groupes aptes à la réticulation par molécule,
(B) 0,5 à 5% en poids d'au moins un peroxyde,
(C) 0 à 50% en poids d'au moins une charge renforçante, et
(X) SANS additifs conducteurs ou semi-conducteurs, la somme des quantités de tous les composants valant 100% en poids,
cette masse de base
- étant appliquée sur un substrat ou introduite dans un moule,
- dans une première étape, une réticulation ayant lieu par chauffage à au moins la température de la 10 h-HWT (= température de demi-vie de 10 heures) du peroxyde (B), la température de chauffage correspondant à au moins 0,2 d'une HWZ (= durée de demi-vie) du peroxyde (B) à la température de réticulation choisie,
- dans une deuxième étape, un traitement thermique ayant lieu au-dessus de la température de la 10 h-HWT du peroxyde (B), la durée de traitement thermique correspondant au moins à une HWZ du peroxyde (B) à la température de traitement thermique choisie.

2. Élastomères réticulés de silicone selon la revendication 1, **caractérisés en ce que** la durée de chauffage de la réticulation dans la première étape correspond à au moins une HWZ du peroxyde (B) à la température de réticulation choisie.

3. Élastomères réticulés de silicone selon la revendication 1, **caractérisés en ce que** la durée de chauffage de la réticulation dans la première étape correspond à au moins deux HWZ du peroxyde (B) à la température de réticulation choisie.

4. Élastomères réticulés de silicone selon l'une des revendications 1 à 3, **caractérisés en ce que** la réticulation dans la première étape a lieu à une température d'au moins la 10 h-HWT à au plus la 1 min-HWT (= température de demi-vie de 1 minute) du peroxyde (B).

5. Élastomères réticulés de silicone selon l'une des revendications 1 à 3, **caractérisés en ce que** la réticulation dans la première étape a lieu à une température d'au moins la 10 h-HWT à au plus 10°C sous la 1 min-HWT du peroxyde (B).

6. Élastomères réticulés de silicone selon l'une des revendications 1 à 5, **caractérisés en ce que** la mase de base contient, en tant que (C), 15 à 45% en poids d'au moins une silice pyrogène ou précipitée présentant des surfaces BET d'au moins 50 m²/g.

7. Élastomères réticulés de silicone selon l'une des revendications 1 à 6, **caractérisés en ce que** 1 à 4% en poids d'au moins un peroxyde (B) sont contenus.

8. Élastomères réticulés de silicone selon l'une des revendications 1 à 7, **caractérisés en ce que**, comme composant (A), un diorganopolysiloxane contenant vinyle et, comme composant (B), un peroxyde spécifique au vinyle sont utilisés.

9. Élastomères réticulés de silicone selon l'une des revendications 1 à 8, la résistance de contact valant
- après 10.000 minutes : < 8,0 10¹⁵ Ohm*cm.

10. Élastomères réticulés de silicone selon l'une des revendications 1 à 8, la résistance de contact valant
- après 10.000 minutes : < 6,0 10¹⁵ Ohm*cm.

11. Procédé de préparation d'élastomères réticulés de silicone, dont la résistance de contact est adaptée à la résistance de contact d'une isolation de câble adjacente, cette résistance de contact étant déterminée sur un élastomère réticulé de silicone d'une épaisseur de 0,5 mm dans un agencement à bague de protection pouvant être chauffé à l'aide d'un champ électrique de 1 kV/mm, selon la norme IEC 62631-3-1 et respectant la valeur suivante après application de la tension de test :
- après 10.000 minutes : < 1,0 10¹⁶ Ohm*cm,
pouvant être obtenus par réticulation d'une masse de base contenant :
(A) 50 à 99% en poids d'au moins un diorganopolysiloxane présentant au moins 2 groupes aptes à la réticulation par molécule,
(B) 0,5 à 5% en poids d'au moins un peroxyde,
(C) 0 à 50% en poids d'au moins une charge renforçante, et
(X) SANS additifs conducteurs ou semi-conducteurs, la somme des quantités de tous les composants valant 100% en poids,
cette masse de base
- étant appliquée sur un substrat ou introduite dans un moule,
- dans une première étape, une réticulation ayant lieu par chauffage à au moins la température de la 10 h-HWT (= température de demi-vie de 10 heures) du peroxyde (B), la température de chauffage correspondant à au moins 0,2 d'une HWZ (= durée de demi-vie) du peroxyde (B) à la température de réticulation choisie,
- dans une deuxième étape, un traitement thermique ayant lieu au-dessus de la température de la 10 h-HWT du peroxyde (B), la durée de traitement thermique correspondant au moins à une HWZ du peroxyde (B) à la température de traitement thermique choisie.

12. Utilisation d'élastomères réticulés de silicone selon la revendication 1 à 10 pour des applications d'isolation.

13. Utilisation selon la revendication 12 pour des applications HVDC (courant continu haute tension).

14. Utilisation selon la revendication 12 pour des garnitures HVDC.
